(19) Europäisches Patentamt / European Patent Office / Office européen des brevets

(11) **EP 4 120 542 B1**

(12) **EUROPEAN PATENT SPECIFICATION**

(45) Date of publication and mention
of the grant of the patent:
**06.05.2026 Bulletin 2026/19**

(21) Application number: **21768252.5**

(22) Date of filing: **09.03.2021**

(51) International Patent Classification (IPC):
*H02M 7/483* $^{(2007.01)}$    *H02M 1/36* $^{(2007.01)}$
*H02M 1/00* $^{(2006.01)}$    *H02M 5/458* $^{(2006.01)}$
*H02M 7/5395* $^{(2006.01)}$

(52) Cooperative Patent Classification (CPC):
**H02M 7/4835; H02M 1/0012; H02M 1/36;
H02M 5/4585; H02M 7/4833;** H02M 7/5395

(86) International application number:
**PCT/JP2021/009251**

(87) International publication number:
**WO 2021/182460 (16.09.2021 Gazette 2021/37)**

(54) **CONTROL DEVICE FOR FREQUENCY CONVERTER**

STEUERVORRICHTUNG FÜR FREQUENZUMFORMER

DISPOSITIF DE COMMANDE POUR CONVERTISSEUR DE FRÉQUENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.03.2020 JP 2020041670**

(43) Date of publication of application:
**18.01.2023 Bulletin 2023/03**

(73) Proprietors:
• **Hitachi, Ltd.**
**Tokyo 100-8280 (JP)**
• **Hitachi Mitsubishi Hydro Corporation**
**Tokyo 108-0014 (JP)**

(72) Inventors:
• **WATANABE, Kenta**
**Tokyo 100-8280 (JP)**
• **KAWAZOE, Hironari**
**Tokyo 100-8280 (JP)**
• **KIKUCHI, Akira**
**Tokyo 100-8280 (JP)**
• **NAKAIDE, Yosuke**
**Tokyo 100-8280 (JP)**
• **BANDO, Akira**
**Tokyo 108-0014 (JP)**

(74) Representative: **MERH-IP Matias Erny Reichl
Hoffmann
Patentanwälte PartG mbB
Paul-Heyse-Straße 29
80336 München (DE)**

(56) References cited:
EP-A1- 3 093 977    EP-A1- 3 416 278
EP-A1- 3 468 027    WO-A1-2015/102060
WO-A1-2019/073761    JP-A- 2019 068 678
JP-A- 2019 075 844    US-A1- 2014 016 379

**Description**

Technical Field

The present invention relates to a control device of a frequency converter as defined by the attached claims.

Background Art

An MMC converter includes a voltage source such as a capacitor and a storage battery that are energy storage elements, and a unit converter including a half-bridge circuit. The unit converter generates a desired voltage by controlling a PWM modulation factor of the half-bridge circuit. Voltages of the capacitor and the storage battery that are energy storage elements fluctuate by repeating charging and discharging at a cycle determined by an output AC frequency of the MMC converter.

A plurality of sets of the unit converters are connected in series to form a two-terminal arm converter, first terminals of the arm converter are connected to respective phase terminals of an AC power source, and a star-connected second terminal is connected to a terminal of a DC power source.

The arm converter connected to the respective phases as described above generates a desired AC voltage to perform an AC current control, and at the same time, superimposes a DC current to implement a power conversion with the DC power source.

A control of the MMC converter includes a function (hereinafter, referred to as an inter-stage balance control) of balancing an average voltage of capacitors between unit converters by a current control of adjusting an arm current to an AC current command and a DC current command from the outside and by mutually adjusting PWM modulation factors of half-bridge circuits provided in the unit converters in an arm, and a function (hereinafter, referred to as an inter-phase balance control) of balancing total accumulated energy of capacitors in arm converters between the arm converters. In order to implement the inter-phase balance control, a circuit element for preventing a circulating current between the arm converters is required.

Patent Literature 1 proposes to provide a circulating current prevention reactor between a first terminal of an arm converter and a terminal of an AC power source for the purpose of preventing a circulating current. A device disclosed in Patent Literature 1 forms a double star type MMC converter (hereinafter referred to as a DSMMC converter) which is one form of an MMC converter.

In addition, Patent Literature PTL 2 discloses a power conversion device capable of suppressing a DC component at a transformer side. Specifically, a power conversion device is provided between a DC circuit including a positive-side DC line and a negative-side DC line as well as an AC circuit, and a positive-side arm and a negative-side arm are connected in series between the positive-side DC line and the negative-side DC line so that an AC current path, such as an AC terminal, is extended from a connection point of the positive-side arm and the negative side arm.

Moreover, in Patent Literature PTL 3, likewise a power conversion device including a main circuit unit having a plurality of arms to which outputs of a plurality of converters are connected in series are described. Herein, a driving unit is particularly stipulated to generate a driving signal for driving a plurality of semiconductor switching elements in a main circuit unit according to a voltage command and output the signal to the plurality of semiconductor switching elements, an AC control unit which generates AC voltage commands for a number of phases on a AC side for controlling AC power of a target to be controlled, and a DC control unit which generates a DC voltage command for setting an average value of DC voltages of the plurality of capacitors in the main circuit unit to a predetermined value.

Furthermore, Patent Literature PTL 4 also discloses an electric power conversion device including a power conversion unit and a converter control unit. Herein, the power conversion unit comprises three arms connected to an AC circuit while the converter control unit further includes a phase DC voltage control unit, a negative sequence current command value calculation unit, an output current control unit, a circulating current control unit, a voltage command value calculation unit, and a gate signal generation unit, and imbalance of cell DC capacitor voltages among phases due to grid imbalance is controlled by circulating current and negative sequence current.

Lastly, in Patent Literature PTL 5, a method and a system for reducing a waveform distortion in a power conversion device is defined. For this, a respective power conversion device is provided with a plurality of cells connected in series and each having a plurality of switching elements and at least one capacitor. A phase information generation unit for generating phase information and on/off control units for turning on/off the switching elements of each of the cells at a timing based on the phase information and cell-specific information of each of the cells are further provided while the on/off control units preferably control the on/off states of the switching elements of each of the cells on the basis of the modulated wave of each of the cells and the carrier wave of each of the cells. In addition, the phase information are described as information involved in the voltage phase of an AC system and the phase difference between the voltage phase and a carrier wave phase.

Non-Patent Literature 1 discloses a device in which DC terminals of two DSMMC converters are back-connected to form a frequency converter, one terminal of an AC power source is connected to a power system, and the other terminal of the AC power source is connected to a rotating machine. According to the device disclosed in the Non-Patent Literature 1, since a DC current is not superimposed on the rotating machine even when the rotating machine is connected to an MMC converter, the device is suitable for a case of a variable speed rotating machine that is directly connected to a power system and operates at a constant frequency.

Citation List

Patent Literature

PTL 1: Japanese Patent NO. 5775033
PTL 2: EP 3 416 278 A1
PTL 3: EP 3 468 027 A1
PTL 4: EP 3 093 977 A1
PTL 5: WO 2019/073761 A

Non-Patent Literature

Non-Patent Literature 1: Makoto Hagiwara, Kazutoshi Nishimura, Hirofumi Akagi "A High-Voltage Motor Drive with a Modular Multilevel PWM Inverter Part I. Experimental Verification by a 400-V, 15-kW Downscaled Model", IEEJ Transactions on Industry Applications, Apr. 2010, Vol. 130, NO. 4, pp. 544-551

Summary of Invention

Technical Problem

The invention relates to a frequency converter (a power conversion device) including two DSMMC converters, and particularly relates to a DSMMC converter connected to a rotating machine.
A first problem in a case of configuring the frequency converter (the power conversion device) with a DSMMC converter connected to the rotating machine is that an output current of the DSMMC converter is limited as an output AC frequency decreases, and a starting torque at the time of starting the rotating machine cannot be ensured. A voltage fluctuation amount of an energy storage element of a unit converter in the DSMMC converter is proportional to the output current and is inversely proportional to the output AC frequency. That is, when the output current of the DSMMC converter is constant, a voltage fluctuation of the energy storage element at the time of starting is increased. The voltage fluctuation of the energy storage element is a disturbance for an inter-stage balance control and causes divergence of the balance control. Therefore, at the time of starting, it is required to limit the output current in order to reduce a fluctuation of a capacitor voltage, and the starting torque at the time of starting the rotating machine cannot be ensured. The first problem is a problem common to an MMC converter connected to a rotating machine, and the Non-Patent Literature 1 does not disclose such a problem and a solution to such a problem.
In order to solve the first problem, a configuration can be conceived in which a capacity of the energy storage element is increased so as to sufficiently reduce the voltage fluctuation at the time of starting without limiting the output current. However, in order to economically implement the DSMMC converter connected to the rotating machine, it is desirable that the rotating machine can be started with the same capacity as that in a case where an energy storage element of each unit converter is driven at a rated output AC frequency.
A second problem in a case of configuring the frequency converter (the power conversion device) with the DSMMC converter connected to the rotating machine is that the inter-stage balance control is likely to become unstable at the time of starting and under an operation condition of a low output AC frequency. In order to implement the DSMMC converter with high efficiency, it is desirable to drive the DSMMC converter at a PWM frequency synchronized with the output AC frequency. However, since the number of times of the inter-stage balance control per unit time is reduced as the PWM frequency decreases, control performance of the inter-stage balance control deteriorates and the inter-stage balance control is likely to become unstable.
With regard to the second problem, Non-Patent Literature 1 discloses that an operation is performed at a PWM frequency of 1 kHz and does not disclose the second problem. In order to implement the MMC converter with high efficiency, it is desirable that the MMC converter can be driven at a smaller PWM frequency.
In view of the above problems, an object of the invention is to provide a control device of a frequency converter that can maintain a voltage balance using a high-efficiency and small-capacity energy storage element even in the case of a low output AC frequency.

Solution to Problem

In order to achieve the above object, the invention provides a control device of a frequency converter in which a rotating machine including a synchronous machine is interconnected to a power system. The frequency converter includes a plurality of sets of arms in which a plurality of unit converters are connected in series, capacitors are connected in parallel in the plurality of unit converters, one ends of the series connected unit converters are connected to respective phases of an alternating current, and the other ends of the series connected unit converters are connected to terminals of a direct current. The control device includes an AC voltage removal calculation unit configured to detect at least voltages of the capacitors in the plurality of unit converters that form the arms, extract a DC component from the capacitor voltages, and input the DC component; an arm voltage command generation unit configured to generate an arm voltage command value; a carrier signal generation unit configured to generate a carrier signal; and a gate pulse generation unit that is provided with a modulated wave generator configured to correct the arm voltage command value to be supplied by the arm voltage command generation unit and that uses the corrected arm voltage command value and the carrier signal to determine a gate command for each of the plurality of unit converters in respective arms. The modulated wave generator uses the DC component calculated in the AC voltage removal calculation unit to correct the arm voltage command value so that magnitude of the voltages of the capacitors in the unit converters of the arms does not fluctuate.

An example is a control device of a variable speed pumped storage power generation system in which a rotating machine including a synchronous machine connected to a pump water wheel is interconnected to a power system via a frequency converter. The frequency converter includes a plurality of sets of arms in which a plurality of unit converters are connected in series, capacitors are connected in parallel in the plurality of unit converters, one ends of the series connected unit converters are connected to respective phases of an alternating current, and the other ends of the series connected unit converters are connected to terminals of a direct current. The control device includes an AC voltage removal calculation unit configured to detect at least voltages of the capacitors in the plurality of unit converters that form the arms, extract a DC component from the capacitor voltages, and input the DC component; an arm voltage command generation unit configured to generate an arm voltage command value; a carrier signal generation unit configured to generate a carrier signal; and a gate pulse generation unit that is provided with a modulated wave generator configured to correct the arm voltage command value to be supplied by the arm voltage command generation unit and that uses the corrected arm voltage command value and the carrier signal to determine a gate command for each of the plurality of unit converters in respective arms. The modulated wave generator uses the DC component calculated in the AC voltage removal calculation unit to correct the arm voltage command value so that magnitude of the voltages of the capacitors in the unit converters of the arms does not fluctuate.

A further example is a control method of a frequency converter in which a rotating machine including a synchronous machine is interconnected to a power system. The frequency converter includes a plurality of sets of arms in which a plurality of unit converters are connected in series, capacitors are connected in parallel in the plurality of unit converters, one ends of the series connected unit converters are connected to respective phases of an alternating current, and the other ends of the series connected unit converters are connected to terminals of a direct current. The control method includes detecting at least voltages of the capacitors in the plurality of unit converters that form the arms and extracting a DC component from the capacitor voltages, comparing an arm voltage command value and a carrier signal, and determining a gate command for each of the plurality of unit converters in respective arms, using the DC component to correct the arm voltage command value so that magnitude of voltages of the capacitors in respective unit converters of the arms does not fluctuate, and comparing the corrected arm voltage command value and the carrier signal.

Advantageous Effects of Invention

According to the invention, since it is possible to increase an output current at the time of starting, it is possible to ensure a starting torque at the time of starting the rotating machine. In addition, it is possible to balance voltages of energy storage elements in respective unit converters at the time of starting and under an operation condition of a low output AC frequency.

Therefore, it is possible to implement a DSMMC converter capable of starting the rotating machine with the same capacity as that in a case where an energy storage element is driven at a rated output AC frequency.

Brief Description of Drawings

[FIG. 1] FIG. 1 is a diagram showing a configuration example of a variable speed pumped storage power generation system and a control device of the variable speed pumped storage power generation system according to an embodiment of the invention.

[FIG. 2] FIG. 2 is a diagram showing a circuit configuration example of an arm converter 105 according to the embodiment of the invention.

[FIG. 3] FIG. 3 is a diagram showing a circuit configuration example of a gate pulse generation unit 111.

[FIG. 4] FIG. 4 is a diagram showing a temporal fluctuation of an actually measured capacitor voltage $V_{CUP\_N}$.

[FIG. 5] FIG. 5 is a diagram showing components of the capacitor voltage $V_{CUP\_N}$.

[FIG. 6] FIG. 6 is a diagram showing a circuit configuration example of an AC voltage removal unit 112.

[FIG. 7] FIG. 7 is a sequence diagram showing an operation example of the AC voltage removal unit 112.

[FIG. 8] FIG. 8 is a diagram showing a circuit configuration example of a carrier signal generation unit 113.

[FIG. 9] FIG. 9 shows input and output characteristics of a pulse number calculator according to the embodiment of the invention.

[FIG. 10A] FIG. 10A is a diagram showing an example of a capacitor voltage waveform when an angular frequency of a rotating machine is 70% of a rated angular frequency.

[FIG. 10B] FIG. 10B is a diagram showing an example of a capacitor voltage waveform when the angular frequency of the rotating machine is the rated angular frequency.

[FIG. 11A] FIG. 11A is a diagram showing an example of a capacitor voltage waveform when driving is performed in a case where an angular frequency $\omega$ is 70% of the rated angular frequency and the pulse number P is 100%.

[FIG. 11B] FIG. 11B is a diagram showing an example of a capacitor voltage waveform when driving is performed in a case where the angular frequency $\omega$ is 70% of the rated angular frequency and the pulse number P is 130%.

Description of Embodiments

Hereinafter, embodiments of the invention will be described with reference to the drawings. A control device of a power conversion device according to the invention can be widely applied to a general power conversion field. Here, a case where the power conversion device is applied as a frequency conversion device of a variable speed pumped storage power generation system will be described in detail as an example, and the invention is not limited by the present embodiment.

[Embodiment]

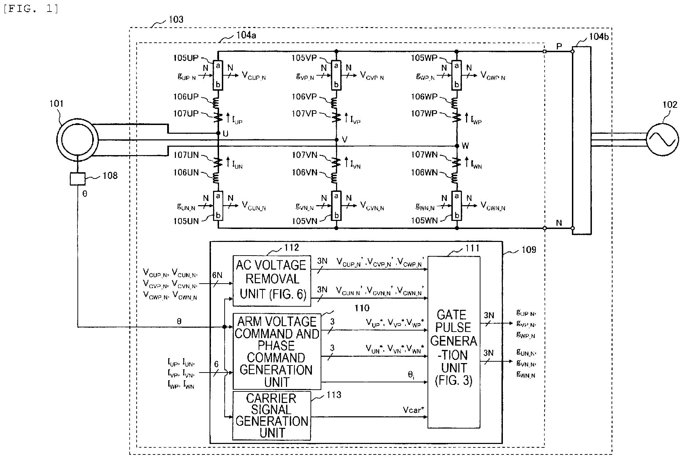

FIG. 1 shows a configuration example of a variable speed pumped storage power generation system and a control device of the variable speed pumped storage power generation system according to an embodiment of the invention. In FIG. 1, a configuration of a main circuit is shown in an upper part, and a configuration of a control device is shown in a lower part. First, description will be given from a main circuit side.

In the variable speed pumped storage power generation system, a rotating machine 101 is interconnected to a power system 102 via a frequency converter 103.

The rotating machine 101 is generally a power generator, a motor, or a power generation motor that is configured with a synchronous machine. In the present specification, the above machines are collectively referred to as a power generation motor. In the case of a variable speed pumped storage power generation system, the rotating machine 101 is a power generation motor whose shaft is connected to a pump water wheel. In a pumping operation mode, the rotating machine 101 receives power from the power system, operates as a motor, and performs a pumping operation. In a power generation mode, the rotating machine 101 is driven by a water wheel, operates as a power generator, and transmits power to the power system. In order to control the variable speed pumped storage power generation system which will be described later, a phase detector 108 is provided, and a rotation phase angle $\theta$ of the rotating machine 101 is detected and transmitted to a control device 109.

The conversion of power and a frequency of the variable speed pumped storage power generation system is performed by the frequency converter 103. The frequency converter 103 is implemented by back-connecting two power conversion devices 104a and 104b. The power conversion device 104a is implemented by a DSMMC converter. The invention is targeted on the power conversion device 104a connected to the rotating machine 101, and a circuit configuration of the other power conversion device 104b may be implemented by a DSMMC converter or other power conversion circuits. By adopting such a configuration, it is possible to control a frequency of an AC system 102 and a frequency and a speed of the rotating machine 101 to have values independent of each other.

A main circuit of the power conversion device 104a includes six sets of arms formed between respective U, V, and W phase terminals indicating three-phase AC terminals of the rotating machine 101 and positive and negative DC terminals indicated by P and N. An arm converter 105 and a circulating current prevention reactor 106 are connected in series on each arm, and further, a current detector 107 controls the variable speed pumped storage power generation system to be described later. The current detector 107 detects an arm current I of each phase and transmits the arm current I to the control device 109.

In the following description, an alphabetic symbol U, V, W, P, and N may be attached to a component reference number (for example, 105) for the purpose of distinguishing an arm, a device in an arm, or the like. According to this example, it can be said that the main circuit of the power conversion device 104a shown in FIG. 1 includes six arm converters 105UP, 105UN, 105VP, 105VN, 105WP, and 105WN each having two output terminals of an a terminal and a b terminal, six circulating current prevention reactors 106UP, 106UN, 106VP, 106VN, 106WP, and 106WN, and six current detectors 107UP, 107UN, 107VP, 107VN, 107WP, and 107WN that respectively detect arm currents $I_{UP}$, $I_{UN}$, $I_{VP}$, $I_{VN}$, $I_{WP}$, and $I_{WN}$ of respective phases. A rule for assigning a symbol is first assigning a symbol of an AC side terminal after a reference number and then assigning a symbol of a DC side terminal after the reference number. It is possible to determine an arm among the six arms based on this rule.

Next, the arm converter 105 will be described. The arm converter 105 includes two output terminals, that is, an a terminal at an AC connection side and a b terminal at a DC connection side. The b terminals of the arm converters 105UP, 105VP, and 105WP and the a terminals of 105UN, 105VN, and 105WN are connected to terminals (a U terminal, a V terminal, and a W terminal) of an AC power source via the circulating current prevention reactors 106UP, 106UN, 106VP, 106VN, 106WP, and 106WN. The a terminals of the arm converters 105UP, 105VP, and 105WP and the b terminals of the arm converters 105UN, 105VN, and 105WN are connected to terminals (a P terminal and an N terminal) of a DC and are connected to the power conversion device 104b on the other side.

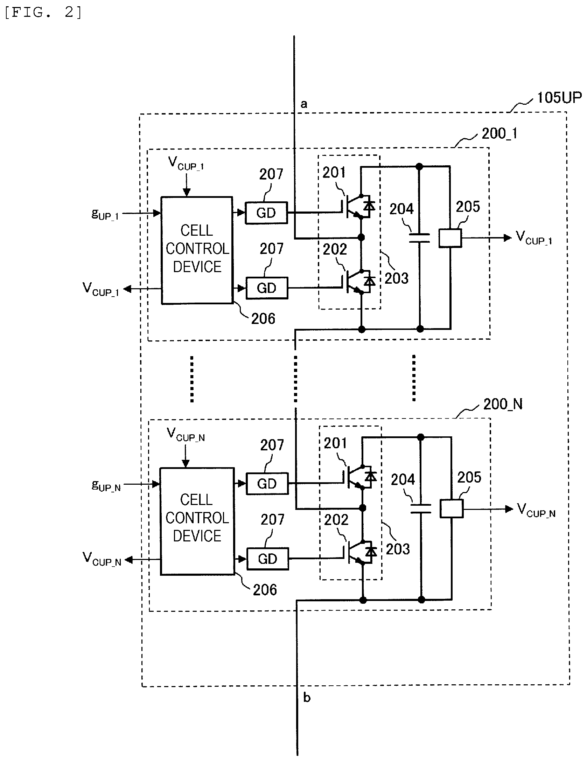

FIG. 2 is a diagram showing a circuit configuration example of the arm converter 105 according to the embodiment of the invention. Hereinafter, the arm converter 105UP will be representatively described. Since the other arm converters 105UN, 105VP, 105VN, 105WP, and 105WN have the similar configuration, description of the other arm converters is omitted.

The arm converter 105UP is a circuit in which N unit converters 200_1 to 200_N are connected in series. The unit converters in FIG. 2 use a half-bridge circuit, and N is the number of unit converters in each arm converter. In a unit converter, a switching circuit 203 in which two switching elements 201 and 202 each having free wheeling diodes connected in parallel are connected in series, a capacitor 204 serving as an energy storage element, and a voltage detector 205 are connected in parallel.

In addition, a cell control device 206 and two gate drive circuits 207 are provided. An a terminal and a b terminal in FIG. 2 are output terminals of the arm converter 105UP, and correspond to the a terminal and the b terminal of an arm converter in FIG. 1.

The voltage detector 205 detects a capacitor voltage of the unit converter 200, and transmits detected capacitor voltages $V_{CUP\_1}$ to $V_{CUP\_N}$ to the cell control devices 206 of respective unit converters.

The cell control device 206 provided for each unit converter 200 distributes gate commands $g_{UP\_1}$ to $g_{UP\_N}$ of the unit converter 200 output from the control device 109 shown in FIG. 1 to the gate drive circuit 207. In addition, the capacitor voltages $V_{CUP\_1}$ to $V_{CUP\_N}$ are output to the control device 109.

The gate drive circuit 207 generates a gate drive signal for switching on and off of the switching elements 201 and 202 in accordance with the gate commands $g_{UP\_1}$ to $g_{UP\_N}$, and supplies the gate drive signal to the switching elements 201 and 202.

Next, the control device 109 will be described with reference to FIGS. 1, 3, and 4.

The control device 109 shown in FIG. 1 uses, as an input, the arm currents $I_{UP}$, $I_{UN}$, $I_{VP}$, $I_{VN}$, $I_{WP}$, and $I_{WN}$, the rotation phase θ of the rotating machine 101, and 6N capacitor voltages $V_{CUP\_N}$, $V_{CUN\_N}$, $V_{CVP\_N}$, $V_{CVN\_N}$, $V_{CWP\_N}$, and $V_{CWN\_N}$ obtained from respective unit converters of the arm converters 105UP, 105UN, 105VP, 105VN, 105WP, and 105WN, and outputs 6N gate commands $g_{UP\_N}$, $g_{UN\_N}$, $g_{VP\_N}$, $g_{VN\_N}$, $g_{WP\_N}$, and $g_{WN\_N}$ to be supplied to respective unit converters of the arm converters 105UP, 105UN, 105VP, 105VN, 105WP, and 105WN.

The control device 109 includes four calculation units, that is, an arm voltage command and phase command generation unit 110, a gate pulse generation unit 111, an AC voltage removal unit 112, and a carrier signal generation unit 113. The arm voltage command and phase command generation unit 110 has a configuration similar to that disclosed in Patent Literature 1, and the invention can be applied regardless of the configuration of this portion, and thus detailed description of the arm voltage command and phase command generation unit 110 is omitted. In short, the arm voltage command and phase command generation unit 110 can be implemented freely as long as the arm voltage command and phase command generation unit 110 has a function capable of generating an arm voltage command and a phase command. In the present embodiment, the gate pulse generation unit 111, the AC voltage removal unit 112, and the carrier signal generation unit 113 will be mainly described.

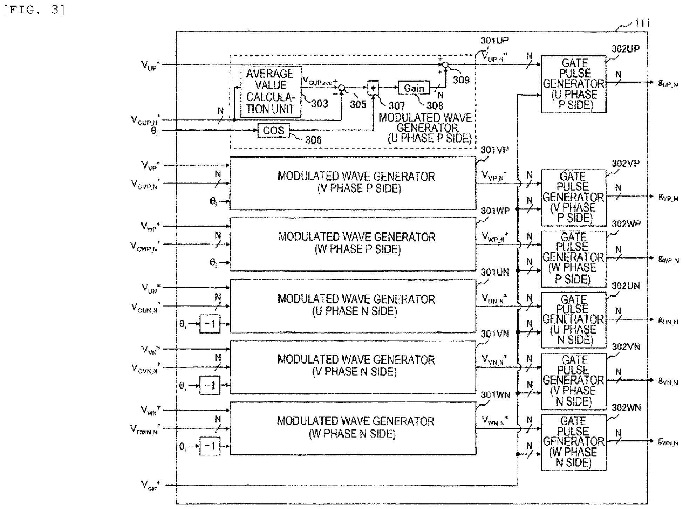

FIG. 3 is a diagram showing a circuit configuration example of the gate pulse generation unit 111. An operation of the gate pulse generation unit 111 will be described with reference to FIG. 3. The gate pulse generation unit 111 uses arm voltage command values $V_{IP*}$, $V_{UN*}$, $V_{VP*}$, $V_{VN*}$, $V_{WP*}$, and $V_{WN*}$, capacitor voltages $V_{CUP\_N}'$, $V_{CUN\_N}'$, $V_{CVP\_N}'$, $V_{CVN\_N}'$, $V_{CWP\_N}'$, and $V_{CWN\_N}'$, a current phase angle $θ_i$, and a triangular wave carrier signal $V_{Car}*$ as input signals. The gate pulse generation unit 111 outputs gate commands $g_{UP\_N}$, $g_{UN\_N}$, $g_{VP\_N}$, $g_{VN\_N}$, $g_{WP\_N}$, and $g_{WN\_N}$ to be supplied to the unit converters.

In FIGS. 1, 3, and the like, a portion in which a diagonal line is disposed in a line indicating an input or an output and that is denoted by N indicates that the similar processing such as input, output, and the like is performed on N unit converters, and N is the number of a plurality of unit converters that forms an arm converter. Therefore, for example, an input of a modulated wave generator 301UP includes one arm voltage command value $V_{UP}{}^*$ and N capacitor voltages $V_{CUP}$, which indicates that a comparison result is obtained for each of the plurality of unit converters that forms the arm converter in a comparison processing inside the modulated wave generator 301UP.

First, operations and functions of a modulated wave generator 301 and a gate pulse generator 302 will be described. In the present invention, the modulated wave generator 301UP and a gate pulse generator 302UP at a U phase P side will be described, and the other modulated wave generators 301VP, 301WP, 301UN, 301VN, and 301WN and gate pulse generators 302VP, 302WP, 302UN, 302VN, and 302WN have the same configurations as configurations of the modulated wave generator 301UP and the gate pulse generator 302UP, and thus description thereof is omitted.

The modulated wave generator 301UP causes an average value calculation unit 303 to calculate an average value $V_{CUPave}$ of the N capacitor voltages $V_{CUP\_N}{}'$ for unit converters in an arm. A modulated wave $V_{UP\_N}{}^*$ is output according to Formula (1) by using the average value $V_{CUPave}$.

[Formula 1]

$$V_{UP\_N} {*}{=} V_{UP} {*} + \mathrm{Gain}\left(V_{CUPave} - V_{CUP\_N}{}'\right) \cdot \cos\theta_i \qquad \cdots (1)$$

Here, the right second term in Formula (1) is a term of an inter-stage balance control, and is a correction term for reducing a differential voltage between a capacitor voltage average value and a capacitor voltage of a target unit converter.

In order to create a correction term in accordance with a sign of a current, a current phase angle $\theta_i$ is used. A control gain 308 is, for example, a proportional gain. The modulated wave generator 301UP shown in FIG. 3 has a specific circuit configuration for generating a modulated wave, 305 and 309 denote a subtractor or an adder, 307 denotes a multiplier, and 306 denotes a function calculator. Calculation functions of the above units can be implemented according to Formula (1).

This processing is executed to obtain an individual modulated wave $V_{UP\_N}{}^*$ corresponding to polarity and magnitude of a difference between a capacitor voltage average value and a capacitor voltage of an individual unit converter. As will be clear from a control to be described later, this control result acts such that the capacitor voltage of an individual unit converter comes close to the capacitor voltage average value and does not deviate greatly. The invention reduces a differential voltage between capacitor voltages of target unit converters.

The gate pulse generator 302UP calculates a gate command $g_{UP\_N}$ to be supplied to a unit converter of an arm. The gate command instructs to compare magnitude of the modulated wave $V_{UP\_N}{}^*$ with magnitude of the triangular wave $V_{Car}{}^*$, and the gate command instructs to perform a control such that the gate command $g_{UP\_N}$ is turned on when $V_{UP\_N}{}^* > V_{Car}{}^*$, and the gate command $g_{UP\_N}$ is turned off when $V_{UP\_N}{}^* < V_{Car}{}^*$.

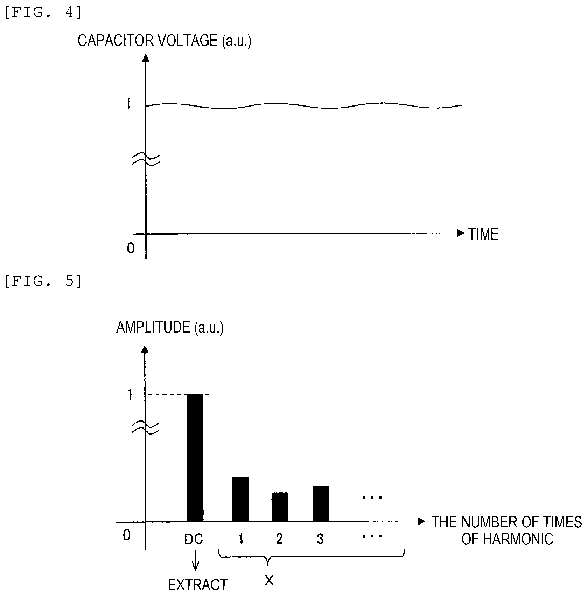

Next, a function and an operation of the AC voltage removal unit 112 which is a central part of the invention will be described. First, FIG. 4 is a diagram showing a temporal fluctuation of the capacitor voltage $V_{CUP\_N}$, and FIG. 5 is a diagram showing components of the capacitor voltage $V_{CUP\_N}$.

In the AC voltage removal unit 112, the actually measured capacitor voltage $V_{CUP\_N}$ fluctuates with time as shown in FIG. 4, and includes an AC component, so that a fundamental wave and a harmonic are cut out and only a DC component is derived as shown in FIG. 5. The configuration of the AC voltage removal unit 112 is not limited as long as only a DC component can be extracted, and a typical example is introduced here.

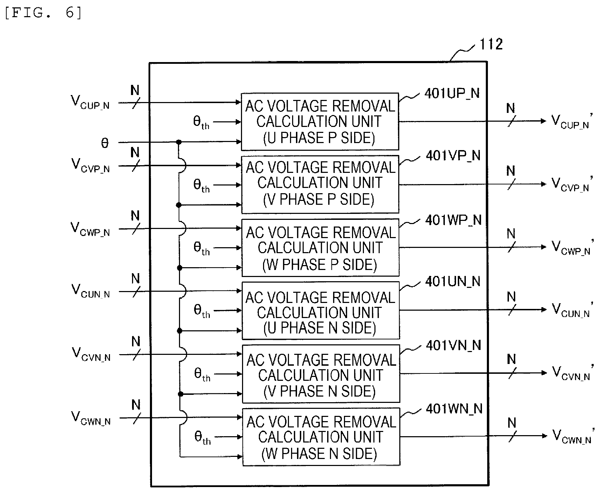

FIG. 6 is a diagram showing a circuit configuration example of the AC voltage removal unit 112. The AC voltage removal unit 112 shown in FIG. 6 includes six AC voltage removal calculation units 401 for each arm, uses 6N capacitor voltages, the rotation phase angle $\theta$ of the rotating machine 101, and a rotation phase angle threshold $\theta_{th}$ as inputs, and outputs 6N capacitor voltages $V_{CUP\_N}{}'$ from which AC voltage components were removed.

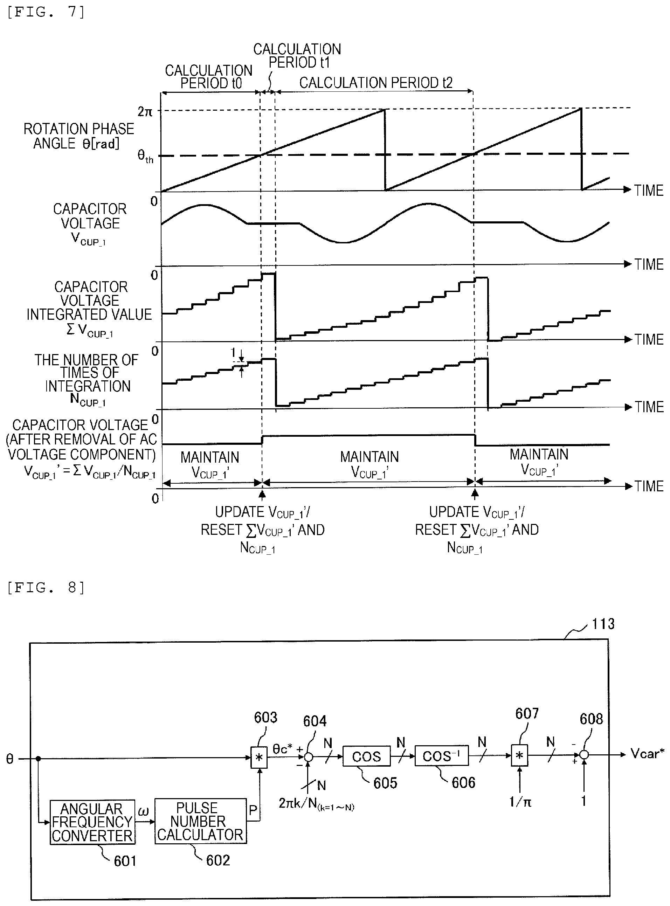

FIG. 7 is a sequence diagram showing an operation example of the AC voltage removal unit 112. An operation of an AC voltage removal calculation unit 401UP_1 will be described with reference to FIG. 7. In FIG. 7, the first cell 401UP_1 at a U phase P side arm is described as an example, and the similar operation applies to AC voltage removal calculation of the other unit converters.

FIG. 7 shows temporal fluctuations of a rotation phase angle $\theta$ of the rotating machine 101, a capacitor voltage $V_{CUP\_1}$, a capacitor voltage integrated value $\Sigma V_{CUP\_1}$, the number of times of integration $N_{CUP\_1}$, and a capacitor voltage $V_{CUP\_1}{}'$ after removal of an AC voltage component from the top. The rotation phase angle $\theta$ of the rotating machine 101 rotates from 0 [rad] to $2\pi$ [rad]. The capacitor voltage $V_{CUP\_1}$ fluctuates by repeating charging and discharging at a cycle determined by an output AC frequency.

First, a calculation period t0 will be described. The calculation period t0 is a calculation period of a condition under which the rotation phase angle $\theta$ of the rotating machine 101 is smaller than the rotation phase angle threshold $\theta_{th}$.

The integrated value $\Sigma V_{CUP\_1}$ of the capacitor voltage $V_{CUP\_1}$ is updated by adding the capacitor voltage $V_{CUP\_1}$

at each calculation time of the control device 109.

The number of times of integration $N_{CUP\_1}$ is updated by adding "+1" at each calculation time of the control device 109. The capacitor voltage $V_{CUP\_1}'$ after the removal of the AC voltage component is maintained at a previous update value until the rotation phase angle $\theta$ of the rotating machine 101 is larger than the rotation phase angle threshold $\theta_{th}$.

Next, an operation in a calculation period t1 will be described. The calculation period t1 is a calculation period in which it is detected that the rotation phase angle $\theta$ of the rotating machine 101 is larger than the rotation phase angle threshold $\theta_{th}$.

The integrated value $\Sigma V_{CUP\_1}$ of the capacitor voltage $V_{CUP\_1}$ in the calculation period t1 is divided by the number of times of integration $N_{CUP\_1}$ in the calculation period t1 so as to calculate the capacitor voltage $V_{CUP\_1}'$ after the removal of the AC voltage component and update a value of the capacitor voltage $V_{CUP\_1}'$. After the value of $V_{CUP-1}'$ is updated, the integrated value $\Sigma V_{CUP\_1}$ of the capacitor voltage $V_{CUP\_1}$ and the number of times of integration $N_{CUP\_1}$ are reset.

Next, an operation in a calculation period t2 will be described. The calculation period t2 is a calculation period from when it is detected that the rotation phase angle $\theta$ is larger than the rotation phase angle threshold $\theta_{th}$ up to a next time when it is detected that the rotation phase angle $\theta$ is larger than the rotation phase angle threshold $\theta_{th}$. The operation in the calculation period t2 is the same as the operation in the calculation period t1, and the integrated value $\Sigma V_{CUP\_1}$ and the number of times of integration $N_{CUP\_1}$ are updated.

By repeatedly performing the above calculation, it is possible to obtain the capacitor voltage $V_{CUP\_1}'$ from which an output AC frequency included in a capacitor voltage is removed. Since the capacitor voltage $V_{CUP\_1}'$ from which the output AC frequency is removed is used as a capacitor voltage of an inter-stage balance control, it is possible to remove a voltage fluctuation which causes divergence of the balance control, and it is possible to stably perform the inter-stage balance control.

Here, although $V_{CUP\_1}'$ in FIG. 7 is updated only once in one cycle, $\theta_{th}$ may be selected to update the $V_{CUP\_1}'$ for a plurality of times in one cycle. In addition, instead of updating $V_{CUP\_1}'$ once in one cycle, $\theta_{th}$ may be selected so that the $V_{CUP\_1}'$ is updated once in two cycles or three cycles.

The operation of the AC voltage removal unit 112 described above is equivalent to automatically adjusting a time constant of an AC voltage filter for removing an AC component included in a capacitor voltage in accordance with a phase of the rotating machine.

FIG. 8 is a diagram showing a circuit configuration example of the carrier signal generation unit 113 of the power conversion device 104a. In FIG. 8, the carrier signal generation unit 113 uses the rotation phase angle $\theta$ of the rotating machine 101 as an input and outputs a triangular wave carrier signal $V_{Car}{}^{*}$. Specifically, first, an angular frequency converter 601 shown in FIG. 8 converts the rotation phase angle $\theta$ of the rotating machine 101 into an angular frequency $\omega$, and a pulse number calculator 602 outputs a pulse number P corresponding to the angular frequency $\omega$.

The carrier signal generation unit 113 generates a triangular wave corresponding to a carrier phase $\theta_c$. The carrier phase $\theta_c$ is calculated according to Formula (2).

[Formula 2]

$$\theta_c = P \times \theta \qquad \cdots \ (2)$$

For example, the triangular wave is generated according to Formula (3) for a k-th unit converter of an arm having N unit converters, so that a phase is shifted by $2\pi/N$ for each unit converter.

[Formula 3]

$$V_{car}\ {*=}\ 1 - \frac{1}{\pi}\cos^{-1}\left\{\cos\left(\theta_c - \frac{2\pi k}{N}\right)\right\} \qquad \cdots \ (3)$$

In Formula (3), $\cos^{-1}$ is defined so as to take a value from 0 to $\pi$. The carrier signal generation unit 113 in FIG. 8 has a specific circuit configuration for generating a triangular wave, 603 and 607 denote a multiplier, 604 and 608 denote a subtractor, and 605 and 606 denote a function calculator.

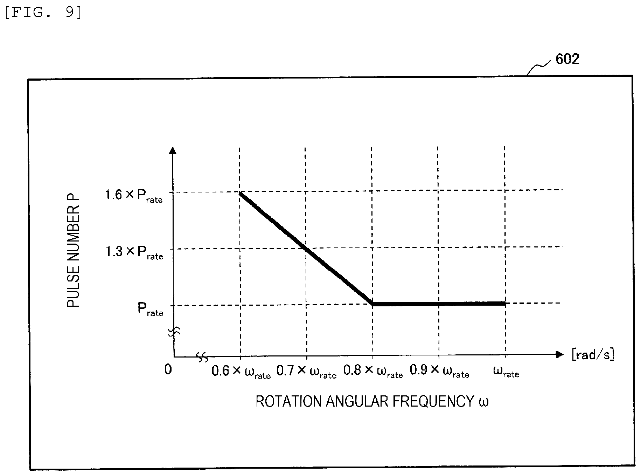

FIG. 9 shows input and output characteristics of the pulse number calculator 602. The pulse number calculator 602 outputs the pulse number P corresponding to a rotation angular frequency $\omega$ of the rotating machine 101 which is an input. In FIG. 9, $\omega_{rate}$ is defined as a rated rotation angular frequency of the rotating machine 101. $P_{rate}$ is defined as a rated pulse number.

In FIG. 9, the pulse number calculator 602 operates such that the pulse number P is output at a constant value of 100% ($P_{rate}$) in an operation range in which the angular frequency $\omega$ has a value from 80% ($0.8 \times \omega_{rate}$) to 100% ($\omega_{rate}$) of the rated angular frequency $\omega_{rate}$, and the pulse number P is output at a value larger than 100% ($P_{rate}$) in an operation range in which the angular frequency $\omega$ is smaller than 80% of the rated angular frequency $\omega_{rate}$. Here, increasing the pulse number P refers to increasing a PWM frequency.

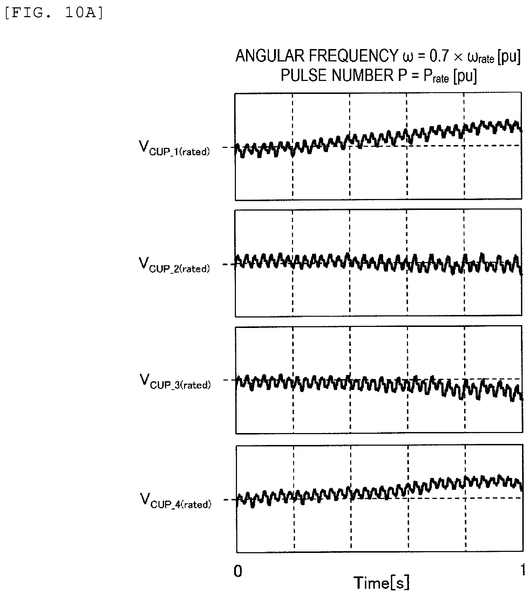

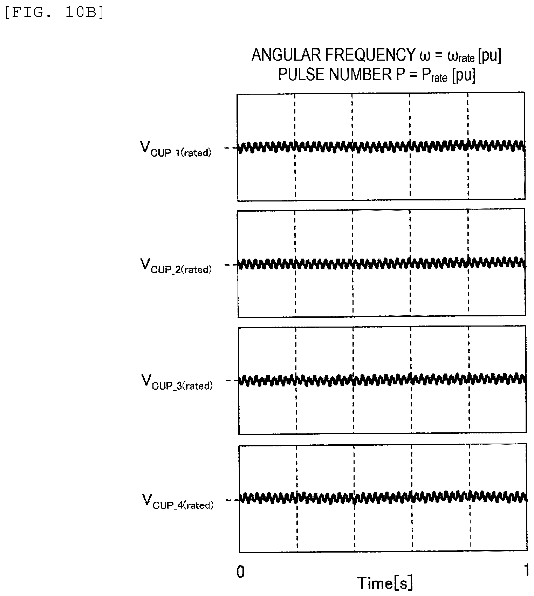

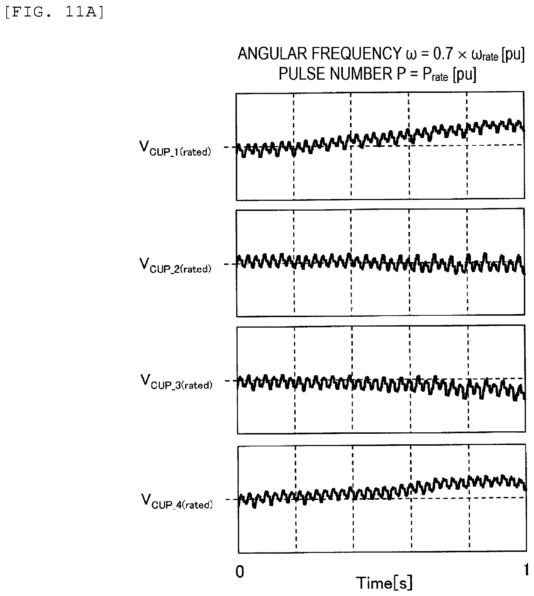

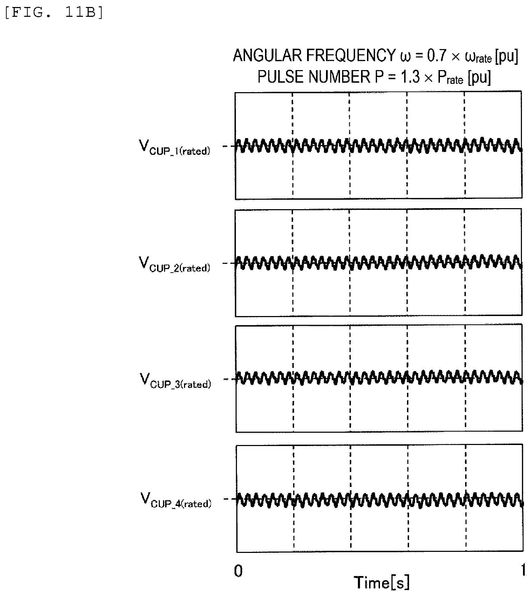

Next, a reason why the pulse number P is changed in accordance with the input and output characteristics shown in FIG. 9 will be described with reference to FIGS. 10A, 10B, 11A, and 11B.

FIG. 10A shows a capacitor voltage of a unit converter in a case where the angular frequency $\omega$ is 70% of the rated angular frequency $\omega_{rate}$ ($0.7 \times \omega_{rate}$), and FIG. 10B shows a capacitor voltage of a unit converter in a case where the angular frequency $\omega$ is 100% ($\omega_{rate}$). Driving is performed in a case where the pulse number P is the rated pulse number Prate.

FIGS. 10A and 10B show a case where the arm converter 105UP includes four unit converters, and the top one is a first unit converter and the bottom one is a fourth unit converter. A horizontal axis represents time, and shows a waveform for a total of one second. As can be seen from FIGS. 10A and 10B, when the frequency $\omega$ is 70% of the rated angular frequency $\omega_{rate}$ (FIG. 10A), a voltage imbalance among four capacitor voltages increases. On the other hand, when the frequency $\omega$ is the rated angular frequency $\omega_{rate}$ (FIG. 10B), a voltage balance of the capacitor voltages can be ensured. A reason why the voltage imbalance is caused only when the frequency $\omega$ is 70% of the rated angular frequency $\omega_{rate}$ (FIG. 10A) is that the number of control times of the inter-stage balance control per unit time is reduced and the inter-stage balance control becomes unstable.

Next, FIG. 11A shows a capacitor voltage in a case where the angular frequency $\omega$ is 70% of the rated angular frequency $\omega_{rate}$ ($0.7 \times \omega_{rate}$) and the pulse number P is 100% ($P_{rate}$), and FIG. 11B shows a capacitor voltage in a case where the angular frequency $\omega$ is 70% of the rated angular frequency $\omega_{rate}$ ($0.7 \times \omega_{rate}$) and the pulse number P is 130% of the rated pulse number $P_{rate}$ ($1.3 \times$ Prate).

As can be seen from FIGS. 11A and 11B, when the pulse number P is the rated pulse number $P_{rate}$ (FIG. 11A), a voltage imbalance among capacitor voltages increases, and when the pulse number P is 130% of the rated pulse number $P_{rate}$ (FIG. 11B), the capacitor voltages are balanced. That is, as can be seen from FIG. 9, when an operation is performed at the angular frequency $\omega$ smaller than the rated angular frequency $\omega_{rate}$, the inter-stage balance control can be stabilized and the balance of the capacitor voltages can be maintained by setting the pulse number P to be larger than the rated pulse number $P_{rate}$.

According to the operation described above, since capacitor voltages of unit converters can be balanced even at the time of starting the rotating machine or under an operation condition in which an output AC frequency is low, it is possible to implement the DSMMC converter using a capacitor having the same electrostatic capacitance as that in a case of driving at the rated output AC frequency. In addition, since the inter-stage balance control can be stabilized and an output current can be increased at the time of starting the rotating machine, a starting torque can be easily ensured.

Reference Signs List

101: rotating machine
102: power system
103: frequency converter
104a, 104b: self-excited converter
105UP, 105UN, 105VP, 105VN, 105WP, 105WN: arm
106UP, 106UN, 106VP, 106VN, 106WP, 106WN: circulating current prevention reactor
107UP, 107UN, 107VP, 107VN, 107WP, 107WN: current detector
108: phase detector
109: control device
110: phase command generation unit
111: gate pulse generation unit
112: AC voltage removal unit
113: carrier signal generation unit
201, 202: switching element
203: switching circuit
204: capacitor
205: DC voltage detector
206: cell control device
207: gate drive circuit
301UP, 301UN, 301VP, 301VN, 301WP, 301WN: modulated wave generator
302UP, 302UN, 302VP, 302VN, 302WP, and 302WN: gate pulse generator
401UP, 401UN, 401VP, 401VN, 401WP, and 401WN: AC voltage removal calculation unit
601: angular frequency converter

602: pulse number calculator

**Claims**

1. A control device (109) of a frequency converter (103) in which a rotating machine (101) including a synchronous machine is interconnected to a power system (102),

   the frequency converter (103) including a plurality of sets of arms (105) in which a plurality of unit converters (200) are connected in series, capacitors (204) are connected in parallel in the plurality of unit converters (200), one ends of the series connected unit converters (200) are connected to respective phases of an alternating current, and the other ends of the series connected unit converters (200) are connected to terminals of a direct current, the control device (109) comprising:

   an AC voltage removal calculation unit (401) configured to detect at least voltages of the capacitors (204) in the plurality of unit converters (200) that form the arms (105), extract a DC component from the capacitor voltages, and input the DC component;
   an arm voltage command generation unit configured to generate an arm voltage command value;
   a carrier signal generation unit (113) configured to generate a carrier signal; and
   a gate pulse generation unit (111) that is provided with a modulated wave generator (301) configured to correct the arm voltage command value to be supplied by the arm voltage command generation unit and that uses the corrected arm voltage command value and the carrier signal to determine a gate command for each of the plurality of unit converters (200) in respective arms, the control device (109) being further **characterized in that**
   the modulated wave generator (301) uses the DC component calculated in the AC voltage removal calculation unit to correct the arm voltage command value so that magnitude of the voltages of the capacitors (204) in the unit converters (200) of the arms (105) does not fluctuate,
   wherein, to correct the arm voltage command value, $V_{UP}{}^*$, the modulates wave generator (301) causes an average value calculation unit (303) to calculate an average value, $V_{CUPave}$, of the capacitors' voltages, $V_{CUP\_N'}$, for the unit converters (200) in an arm (105) and outputs a modulates wave, $V_{UP\_N}{}^*$, according to the Formula

   $$V_{UP\_N} *= V_{UP} * + \mathrm{Gain}\left(V_{CUPave} - V_{CUP\_N}'\right) \cdot \cos\theta_i \quad,$$

   wherein $V_{UP}{}^*$ defines the arm voltage command value, $\theta_i$ is a current phase angle and Gain defines a control gain, such as a proportional gain,
   the AC voltage removal calculation unit (401) changes a filter time constant according to a phase of the rotating machine (101) in order to remove an AC voltage determined by a rotation frequency of the rotating machine (101), and
   the AC voltage removal calculation unit (401) calculates an integrated voltage obtained by integrating capacitor voltages until a desired phase threshold is reached, divides the integrated voltage by the number of times of integration to calculate an average voltage of the unit converters (200) in a desired period, and maintains the average voltage until the phase threshold is reached for a next time, thereby removing the AC voltage.

2. The control device (109) of a frequency converter (103) according to claim 1, wherein
   the carrier signal generation unit (113) determines a carrier frequency to be applied to a power conversion device (104) based on the rotation frequency of the rotating machine (101), and the carrier signal generation unit (113) has a function of preventing a voltage imbalance of the capacitor voltages by increasing a pulse number for PWM driving the frequency converter (103) in an operation region in which the rotation frequency of the rotating machine (101) is equal to or less than a specified value.

3. The control device (109) of a frequency converter (103) according to claim 1, wherein
   the carrier signal generation unit (113) has a function of increasing the pulse number for PWM driving the frequency converter (103) in an operation region in which a rotation angular frequency of the rotating machine (101) is less than 80% of a rated rotation angular frequency.

**Patentansprüche**

1.  Eine Steuervorrichtung (109) eines Frequenzumrichters (103), bei der eine rotierende Maschine (101) mit einer Synchronmaschine mit einem Stromversorgungssystem (102) verbunden ist,

    wobei der Frequenzumrichter (103) mehrere Sätze von Armen (105) umfasst, in denen mehrere Einheitsumrichter (200) in Reihe geschaltet sind, Kondensatoren (204) in den mehreren Einheitsumrichtern (200) parallel geschaltet sind, wobei ein Ende der in Reihe geschalteten Einheitswandler (200) mit den jeweiligen Phasen eines Wechselstroms verbunden ist und das andere Ende der in Reihe geschalteten Einheitswandler (200) mit den Anschlüssen eines Gleichstroms verbunden ist,
    wobei die Steuervorrichtung (109) umfasst:

    eine Wechselspannungsentfernungs-Berechnungseinheit (401), die so konfiguriert ist, dass sie mindestens die Spannungen der Kondensatoren (204) in den mehreren Einheitenwandlern (200), die die Arme (105) bilden, erfasst, eine Gleichstromkomponente aus den Kondensatorspannungen extrahiert und die Gleichstromkomponente eingibt;
    eine Armspannungsbefehlserzeugungseinheit, die so konfiguriert ist, dass sie einen Armspannungsbefehlswert erzeugt;
    eine Trägersignalerzeugungseinheit (113), die so konfiguriert ist, dass sie ein Trägersignal erzeugt; und
    eine Gate-Impuls-Erzeugungseinheit (111), die mit einem Modulationswellengenerator (301) versehen ist, der so konfiguriert ist, dass er den von der ArmspannungsbefehlsErzeugungseinheit zu liefernden Armspannungsbefehlswert korrigiert, und der den korrigierten Armspannungsbefehlswert und das Trägersignal verwendet, um einen Gate-Befehl für jeden der mehreren Einheitswandler (200) in den jeweiligen Armen zu bestimmen, wobei die Steuervorrichtung (109) ferner **dadurch gekennzeichnet ist, dass**
    der Modulationswellengenerator (301) die in der Wechselspannungsentfernungs-Berechnungseinheit berechnete Gleichstromkomponente verwendet, um den Armspannungsbefehlswert so zu korrigieren, dass die Größe der Spannungen der Kondensatoren (204) in den Einheitswandlern (200) der Arme (105) nicht schwankt,
    wobei zur Korrektur des Armspannungsbefehlswerts $V_{UP}$ * der Modulationswellengenerator (301) eine Durchschnittswertberechnungseinheit (303) veranlasst, einen Durchschnittswert $V_{CUPave}$ der Kondensatorspannungen $V_{CUP\_N}$, für die Einheitswandler (200) in einem Arm (105) berechnet und eine modulierte Welle $V_{UP\_N}$ * gemäß der Formel

    $$V_{UP\_N} *= V_{UP} * + \text{Gain}\left(V_{CUPave} - V_{CUP\_N}'\right) \cdot cos\theta_i \quad ,$$

    wobei $V_{UP}$ * den Armspannungs-Befehlswert definiert, $\theta_i$ ein aktueller Phasenwinkel ist und Gain eine Regelverstärkung definiert, beispielsweise eine proportionale Verstärkung,
    die Wechselspannungsentfernungs-Berechnungseinheit (401) eine Filterzeitkonstante entsprechend einer Phase der rotierenden Maschine (101) ändert, um eine durch eine Drehfrequenz der rotierenden Maschine (101) bestimmte Wechselspannung zu entfernen, und
    die Wechselspannungsentfernungs-Berechnungseinheit (401) berechnet eine integrierte Spannung, die durch Integrieren der Kondensatorspannungen bis zum Erreichen einer gewünschten Phasenschwelle erhalten wird, dividiert die integrierte Spannung durch die Anzahl der Integrationen, um eine Durchschnittsspannung der Einheitswandler (200) in einem gewünschten Zeitraum zu berechnen, und hält die Durchschnittsspannung aufrecht, bis die Phasenschwelle zum nächsten Mal erreicht wird, wodurch die Wechselspannung entfernt wird.

2.  Die Steuervorrichtung (109) eines Frequenzumrichters (103) gemäß Anspruch 1, wobei
    die Trägersignalerzeugungseinheit (113) eine Trägersignalfrequenz bestimmt, die an eine Leistungsumwandlungsvorrichtung (104) angelegt werden soll, basierend auf der Drehfrequenz der rotierenden Maschine (101), und die Trägersignalerzeugungseinheit (113) eine Funktion zum Verhindern einer Spannungsunsymmetrie der Kondensatorspannungen durch Erhöhen einer Impulszahl für die PWM-Ansteuerung des Frequenzumrichters (103) in einem Betriebsbereich aufweist, in dem die Drehfrequenz der rotierenden Maschine (101) gleich oder kleiner als ein bestimmter Wert ist.

3.  Die Steuervorrichtung (109) eines Frequenzumrichters (103) gemäß Anspruch 1, wobei
    die Trägersignalerzeugungseinheit (113) eine Funktion zum Erhöhen der Impulszahl für die PWM-Ansteuerung des Frequenzumrichters (103) in einem Betriebsbereich aufweist, in dem eine Drehwinkelgeschwindigkeit der rotierenden Maschine (101) weniger als 80% einer Nenn-Drehwinkelgeschwindigkeit beträgt.

## Revendications

1. Dispositif de commande (109) d'un convertisseur de fréquence (103) dans lequel une machine rotative (100) incluant une machine synchrone est interconnectée à un système de puissance (102),

le convertisseur de fréquence (103) incluant une pluralité d'ensembles de bras (105) dans lesquels une pluralité de convertisseurs d'unité (200) sont connectés en série, des condensateurs (204) sont connectés en parallèle dans la pluralité de convertisseurs d'unité (200), des extrémités des convertisseurs d'unité connectés en série (200) sont connectées à des phases respectives de courant alternatif, et les autres extrémités des convertisseurs d'unité connectés en série (200) sont connectées à des bornes de courant continu,

le dispositif de commande (109) comprenant :

une unité de calcul de suppression de tension CA (401) configurée pour détecter au moins des tensions des condensateurs (204) dans la pluralité de convertisseurs d'unité (200) qui forment les bras (105), extraire une composante CC des tensions de condensateur, et entrer la composante CC ;

une unité de génération d'ordre de tension de bras configurée pour générer une valeur d'ordre de tension de bras ;

une unité de génération de signal de porteuse (113) configurée pour générer un signal de porteuse ; et

une unité de génération d'impulsions de grille (111) qui est dotée d'un générateur d'ondes modulées (301) configuré pour corriger la valeur d'ordre de tension de bras devant être alimentée par l'unité de génération d'ordre de tension de bras et qui utilise la valeur d'ordre de tension de bras corrigée et le signal de porteuse pour déterminer un ordre de grille pour chacun de la pluralité de convertisseurs d'unités (200) dans des bras respectifs, le dispositif de commande (109) étant en outre **caractérisé en ce que**

le générateur d'ondes modulées (301) utilise la composante CC calculée dans l'unité de calcul de suppression de tension CA pour corriger la valeur d'ordre de tension de bras de telle sorte qu'une amplitude des tensions des condensateurs (204) dans les convertisseurs d'unités (200) des bras (105) ne fluctue pas, dans lequel, pour corriger la valeur d'ordre de tension de bras, $V_{UP}{}^*$, le générateur d'ondes modulées (301) amène une unité de calcul de valeur moyenne (303) à calculer une valeur moyenne, $V_{CUPave}$, des tensions de condensateurs, $V_{CUP\_N'}$, pour les convertisseurs d'unités (200) dans un bras (105) et sort une onde modulée, $V_{UP\_N}{}^*$, en accord avec la formule

$$V_{UP\_N}{}^* = V_{UP}{}^* + Gain(V_{CUPave} - V_{CUP\_N'}) \cdot cos\theta_i \quad,$$

dans laquelle $V_{UP}{}^*$ définit la valeur d'ordre de tension de bras, $\theta_i$ est un angle de phase de courant et Gain définit un gain de commande, comme un gain proportionnel,

l'unité de calcul de suppression de tension CA (401) change une constante de temps de filtre en accord avec une phase de la machine rotative (101) afin de supprimer une tension CA déterminée par une fréquence de rotation de la machine rotative (101), et

l'unité de calcul de suppression de tension CA (401) calcule une tension intégrée obtenue en intégrant des tensions de condensateur jusqu'à atteindre une phase seuil désirée, divise la tension intégrée par le nombre d'intégrations pour calculer une tension moyenne des convertisseurs d'unité (200) dans une période désirée, et maintient la tension moyenne jusqu'à atteindre la phase seuil pour un temps suivant, supprimant ainsi la tension CA.

2. Dispositif de commande (109) d'un convertisseur de fréquence (103) selon la revendication 1, dans lequel l'unité de génération de signal de porteuse (113) détermine une fréquence de porteuse devant être appliquée un dispositif de conversion de puissance (104) sur la base de la fréquence de rotation de la machine rotative (101), et l'unité de génération de signal de porteuse (113) a une fonction d'empêchement de déséquilibre de tension des tensions de condensateur en augmentant un nombre d'impulsions pour un pilotage PWM du convertisseur de fréquence (103) dans une région de fonctionnement dans laquelle la fréquence de rotation de la machine rotative (101) est égale ou inférieure à une valeur spécifiée.

3. Dispositif de commande (109) d'un convertisseur de fréquence (103) selon la revendication 1, dans lequel

l'unité de génération de signal de porteuse (113) a une fonction d'augmentation du nombre d'impulsions pour un pilotage PWM du convertisseur de fréquence (103) dans une région de fonctionnement dans laquelle une fréquence angulaire de rotation de la machine rotative (101) est inférieure à 80 % d'une fréquence angulaire de rotation nominale.

[FIG. 1]

[FIG. 2]

[FIG. 3]

[FIG. 4]

CAPACITOR VOLTAGE (a.u.)

[FIG. 5]

AMPLITUDE (a.u.)

[FIG. 6]

[FIG. 7]

[FIG. 8]

EP 4 120 542 B1

[FIG. 9]

602

PULSE NUMBER P

1.6 × P_rate

1.3 × P_rate

P_rate

0    0.6 × ω_rate   0.7 × ω_rate   0.8 × ω_rate   0.9 × ω_rate   ω_rate

[rad/s]

ROTATION ANGULAR FREQUENCY ω

[FIG. 10A]

ANGULAR FREQUENCY ω = 0.7 × ω$_{rate}$ [pu]
PULSE NUMBER P = P$_{rate}$ [pu]

$V_{CUP\_1(rated)}$

$V_{CUP\_2(rated)}$

$V_{CUP\_3(rated)}$

$V_{CUP\_4(rated)}$

0                    Time[s]                    1

[FIG. 10B]

ANGULAR FREQUENCY ω = ω$_{rate}$ [pu]
PULSE NUMBER P = P$_{rate}$ [pu]

$V_{CUP\_1(rated)}$

$V_{CUP\_2(rated)}$

$V_{CUP\_3(rated)}$

$V_{CUP\_4(rated)}$

0        Time[s]        1

[FIG. 11A]

ANGULAR FREQUENCY ω = 0.7 × $ω_{rate}$ [pu]
PULSE NUMBER P = $P_{rate}$ [pu]

$V_{CUP\_1(rated)}$

$V_{CUP\_2(rated)}$

$V_{CUP\_3(rated)}$

$V_{CUP\_4(rated)}$

0                    Time[s]                    1

[FIG. 11B]

ANGULAR FREQUENCY ω = 0.7 × ω$_{rate}$ [pu]
PULSE NUMBER P = 1.3 × P$_{rate}$ [pu]

V$_{CUP\_1(rated)}$

V$_{CUP\_2(rated)}$

V$_{CUP\_3(rated)}$

V$_{CUP\_4(rated)}$

0                    Time[s]                    1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5775033 B
- EP 3416278 A1
- EP 3468027 A1
- EP 3093977 A1
- WO 2019073761 A

**Non-patent literature cited in the description**

- **MAKOTO HAGIWARA** ; **KAZUTOSHI NISHIMURA** ; **HIROFUMI AKAGI**. A High-Voltage Motor Drive with a Modular Multilevel PWM Inverter Part I. Experimental Verification by a 400-V, 15-kW Downscaled Model. *IEEJ Transactions on Industry Applications*, April 2010, vol. 130 (4), 544-551